# EUROPEAN PATENT SPECIFICATION

(11) **EP 4 624 193 B1**
(45) Date of publication and mention of the grant of the patent: **16.09.2026**
(21) Application number: 24176728.4
(22) Date of filing: 17.05.2024
(51) Int. Cl.: B60B 33/00, B60G 21/05

(54) **TRANSPORTATION VEHICLE AND DRIVING ASSEMBLY THEREOF**
TRANSPORTFAHRZEUG UND ANTRIEBSANORDNUNG DAFÜR
VÉHICULE DE TRANSPORT ET SON ENSEMBLE D'ENTRAÎNEMENT

(30) Priority: 28.03.2024 CN 202420626785 U
(43) Date of publication of application: 01.10.2025
(73) Proprietor: Zhejiang EP Equipment Co., Ltd., Zhejiang (CN)
(72) Inventor: Wang, Hao, Zhejiang (CN); Wang, Kang, Zhejiang (CN); Dai, Jincai, Zhejiang (CN); Huang, Chao, Zhejiang (CN)
(74) Representative: Vossius & Partner Patentanwälte Rechtsanwälte mbB

(56) References cited:
- EP-B1- 1 868 829
- CN-U- 205 131 373

## Description

### TECHNICAL FIELD

The present disclosure relates to the technical field of transportation vehicles, in particular to a transportation vehicle and a driving assembly thereof.

### BACKGROUND

The Chinese utility model patent with the publication number of CN205131373U discloses a synchronous universal wheel mechanism according to the preamble of claim 1. The synchronous universal wheel mechanism includes an installation seat and wheel seats arranged in pairs. The wheel seats are fixed on the installation seat. A universal wheel is installed at the bottom of the wheel seat. The synchronous universal wheel mechanism also includes a synchronous rod, and both ends of the synchronous rod are respectively fixed on the wheel seats arranged in correspondence with each other. The wheel seat is provided with a wheel load adjusting device. The wheel load adjusting device includes a longitudinally arranged hollow threaded shaft arranged on the installation seat. A screw penetrating through the hollow threaded shaft is arranged in the hollow threaded shaft. A buffer sleeve sleeves the screw and is located below the hollow threaded shaft. The screw passes through the hollow threaded shaft and the buffer sleeve successively, and the end of the screw is fixed on the wheel seat through a nut. The buffer sleeve is made of elastic materials. During the process of applying force to the hollow threaded shaft by the screw and applying force to the buffer sleeve by the hollow threaded shaft, the buffer sleeve can be elastically deformed, so that the height of the whole wheel load adjusting device is lowered, and then the height of the whole wheel seat is lowered. Therefore, the pressure between the universal wheel and the ground is increased to increase the load of the universal wheel, so that the universal wheel can share the load with the driving wheel of the car body.

The transportation vehicle works in the application scenarios with frequent vibration and is large in bearing range. Under frequent vibration, the quick response, quick rebound and large-scale expansion of the buffer structure are needed. According to the disclosed synchronous universal wheel mechanism, a floating self-adjustment function of the universal wheel can be realized through the buffer sleeve in a certain range due to the fact that the buffer sleeve can expand in a certain range, but the mechanism is used for stacking vehicles. The buffer sleeve serves as the buffer material for buffering the universal wheel, but the buffer pad made of polyurethane material cannot realize rapid rebound and large-scale compression, is extremely limited in expansion range, and is not suitable for the application scenarios, such as light load and heavy load large-bearing range and frequent vibration, of transportation vehicles.

### SUMMARY

In order to solve the above problem, the present disclosure aims to provide a transportation vehicle and a driving assembly thereof.

A driving assembly of a transportation vehicle includes a driving wheel, a pair of universal wheels arranged on both sides of the driving wheel, and a synchronizing mechanism connected with a pair of universal wheels. The synchronizing mechanism includes a pair of wheel seats and a synchronous rod connected with a pair of wheel seat. Each wheel seat is respectively provided with a first pressure spring and a second pressure spring, and the expansion axis of the first pressure spring and the expansion axis of the second pressure spring are longitudinally arranged and parallel to each other. The elastic rigidity of the first pressure spring is smaller than that of the second pressure spring, and an upper end of the first pressure spring is higher than that of the second pressure spring after the driving assembly has been installed.

Preferably, driving assembly includes a locating plate. The locating plate includes a side plate and an upper limit plate which are mutually fixed. The side plate is fixed on a vehicle body through connecting pieces. The upper limit plate is fixed on the side plate and is provided with a first limit part and a second limit part which are arranged towards the wheel seats. The first limit part is arranged corresponding to the first pressure spring, the second limit part is arranged corresponding to the second pressure spring. The first limit part is higher than the second limit part.

Preferably, the locating plate is integrally molded.

Preferably, the driving assembly includes a guide screw. An upper end of the guide screw is fixed on the first limit part through screw-thread fit, and the first pressure spring sleeves the guide screw; and/or the upper end of the guide screw is fixed on the second limit part through screw-thread fit, and the second pressure spring sleeves the guide screw.

Preferably, the wheel seat is provided with a first locating seat arranged upwards. The second limit part is provided with a second locating seat towards the wheel seat. The first locating seat and the second locating seat are coaxially arranged, and both ends of the second pressure spring respectively sleeve the first locating seat and the second locating seat.

The present disclosure also aims to provide a transportation vehicle, including the driving assembly of a transportation vehicle according to any one of the above.

Through the adoption of the above structure, the first pressure spring and the second pressure spring with different elastic rigidities are arranged, and the height of the upper end of the first pressure spring is higher than that of the upper end of the second pressure spring. Therefore, by selecting proper elastic rigidity and height difference, the first pressure spring with small elastic rigidity can telescopically float during light loading of the transportation vehicle, and the second pressure spring with large elastic rigidity cannot bear the weight. The second pressure spring with large elastic rigidity telescopically floats during heavy loading of the transportation vehicle, and the first pressure spring does not operate. Therefore, the driving assembly can play a floating adjustment effect under light load and heavy load conditions of the transportation vehicle.

### BRIEF DESCRIPTION OF THE DRAWINGS

FIG. 1 is a structural schematic diagram of the present disclosure (a driving wheel is not shown).
FIG. 2 is a structural schematic diagram at another angle in FIG. 1 (a first pressure spring and a second pressure spring are not shown).

### Reference signs in the attached figures:

1, universal wheel; 2, wheel seat; 3, synchronous rod; 41, first pressure spring; 42, second pressure spring; 5, locating plate; 6, guide screw; 71, gasket; 72, fixing sleeve; 81, first locating seat; and 82, second locating seat.

### DETAILED DESCRIPTION OF THE EMBODIMENTS

### Embodiments in the present disclosure are described in detail below.

### Embodiment I

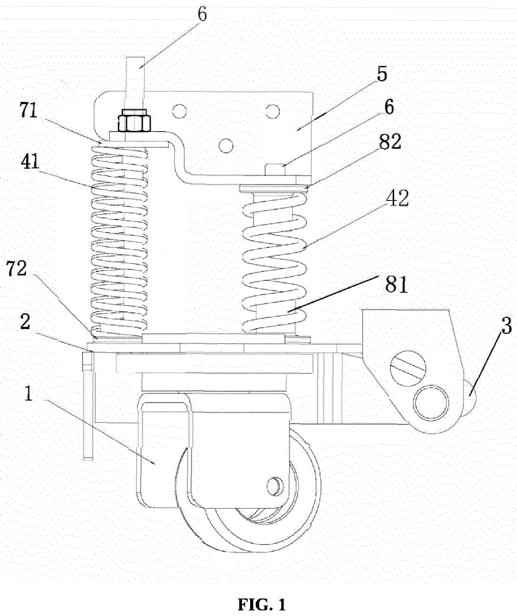

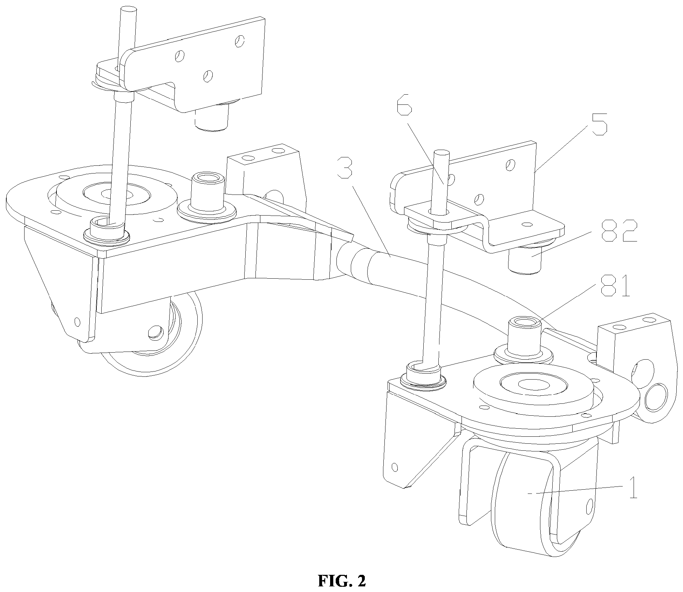

The embodiment provides a driving assembly of a transportation vehicle. As shown in FIG. 1 and FIG. 2, the driving assembly includes a driving wheel, a pair of universal wheels 1 arranged on both sides of the driving wheel and a synchronizing mechanism connected with a pair of universal wheels 1. The synchronizing mechanism includes a pair of wheel seats 2 and a synchronous rod 3 connected with a pair of wheel seat 2. Each wheel seat 2 is respectively provided with a first pressure spring 41 and a second pressure spring 42, and the expansion axis of the first pressure spring 41 and the expansion axis of the second pressure spring 42 are longitudinally arranged and parallel to each other. The elastic rigidity of the first pressure spring 41 is smaller than that of the second pressure spring 42, and an upper end of the first pressure spring 41 is higher than that of the second pressure spring 42 after the driving assembly has been installed.

According to the above arrangement, when the transportation vehicle vibrates in the driving process, the flotation of the universal wheels 1 can cause the expansion of the first pressure spring 41 and/or the second pressure spring 42. The elastic rigidity of the first pressure spring 41 is different from that of the second pressure spring 42. In the specific embodiments, the first pressure spring 41 is a soft pressure spring, and the second pressure spring 42 is a hard pressure spring. Moreover, the first spring can be expanded firstly when the universal wheels 1 float by selecting proper length and installation height of the pressure spring. In the specific embodiments, the bottom installation height of the first pressure spring 41 can be the same as that of the second pressure spring 42, and the upper end of the first pressure spring 41 is higher than that of the second pressure spring 42. Because the soft pressure spring is matched with the hard pressure spring, the soft pressure spring works under the light load state of the transportation vehicle and the hard pressure spring works under the heavy load state of the transportation vehicle, so that the floating adjustment effect can be achieved under the light load and the heavy load states of the transportation vehicle.

As shown in FIG. 2, the synchronizing mechanism realizes upper limit for the first pressure spring 41 and the second pressure spring 42 through the locating plate 5, and realizes lower limit for the first pressure spring 41 and the second pressure spring 42 through the wheel seats 2. The locating plate 5 includes a side plate and an upper limit plate which are mutually fixed. The side plate is fixed on a vehicle body through connecting pieces. The upper limit plate is fixed on the side plate and is provided with a first limit part and a second limit part which are arranged towards the wheel seats 2. The first limit part is arranged corresponding to the first pressure spring 41, the second limit part is arranged corresponding to the second pressure spring 42. The first limit part is higher than the second limit part. Through the arrangement, upper limit for the first pressure spring 41 and the second pressure spring 42 can be realized through the same workpiece, so that the installation structure is simple. Preferably, the locating plate 5 is integrally molded so as to strengthen the integral strength of the locating plate 5.

As shown in FIG. 1 and FIG. 2, the driving assembly includes a guide screw 6. An upper end of the guide screw 6 is fixed on the first limit part through screw-thread fit, and the first pressure spring 41 sleeves the guide screw 6; and/or the upper end of the guide screw 6 is fixed on the second limit part through screw-thread fit, and the second pressure spring 42 sleeves the guide screw 6. The first pressure spring 41 and/or the second pressure spring 42 are/is telescopically guided through the guide screw 6.

Preferably, upper and lower ends of the first pressure spring 41 and the second pressure spring 42 are provided with anti-friction pieces. In the embodiment, the anti-friction pieces can be gaskets 71 or fixing sleeves 72. The locating pieces and the wheel seats 2 can be prevented from being worn by the pressure springs by setting the anti-friction pieces. In the embodiment, the wheel seat 2 is provided with a first locating seat 81 arranged upwards. The second limit part is provided with a second locating seat 82 towards the wheel seat 2. The first locating seat 81 and the second locating seat 82 are coaxially arranged, and both ends of the second pressure spring 42 respectively sleeve the first locating seat 81 and the second locating seat 82. Wherein, the first locating seat 81 and the wheel seat 2 as well as the second locating seat 82 and the locating piece are respectively fixed through screw-thread fit of the connecting pieces. The first locating seat 81 is provided with a locating shaft bulging downwards, and the second locating seat 82 is provided with a locating shaft bulging upwards. Both ends of the second pressure spring 42 respectively sleeve the locating shaft to locate the second pressure spring 42. Preferably, a lower end of the guide screw 6 stretches out of the locating shaft of the second locating seat 82 downwards, so that the second pressure spring 42 is telescopically guided through the guide screw 6.

As shown in FIG. 2, the synchronous rod 3 in the embodiment is located on the rear side of the wheel seat 2. Through the arrangement, the synchronous rod 3 is arranged close to the wheel seat 2, so that the occupied space is small. The synchronous rod 3 is installed on a vehicle seat through an installation plate of the synchronous rod 3. The synchronous rod 3 can rotate relative to the installation plate of the synchronous rod 3 so as to float synchronously with the wheel seat 2.

### Embodiment II

The embodiment provides a transportation vehicle, including a driving assembly of a transportation vehicle in the first embodiment.

Although the embodiments of the present disclosure have already been illustrated and described, various changes, modifications, replacements and transformations can be made by those skilled in the art under the condition of without departing from the claims.

## Claims

1. A driving assembly of a transportation vehicle, comprising a driving wheel, a pair of universal wheels (1) arranged on both sides of the driving wheel, and a synchronizing mechanism connected with a pair of universal wheels, wherein the synchronizing mechanism includes a pair of wheel seats (2) and a synchronous rod (3) connected with a pair of wheel seats (2), each wheel seat is respectively provided with a first pressure spring (41), wherein the driving assembly of the transportation vehicle is **characterised by** each wheel seat is respectively provided with a second pressure spring (42), and the expansion axis of the first pressure spring and the expansion axis of the second pressure spring are longitudinally arranged and parallel to each other; the elastic rigidity of the first pressure spring is smaller than that of the second pressure spring, and an upper end of the first pressure spring is higher than that of the second pressure spring after the driving assembly has been installed.

2. The driving assembly of a transportation vehicle according to claim 1, wherein the driving assembly includes a locating plate (5), the locating plate comprises a side plate and an upper limit plate which are mutually fixed, the side plate is fixed on a vehicle body through connecting pieces, the upper limit plate is fixed on the side plate and is provided with a first limit part and a second limit part which are arranged towards the wheel seats, the first limit part is arranged corresponding to the first pressure spring, the second limit part is arranged corresponding to the second pressure spring, and the first limit part is higher than the second limit part.

3. The driving assembly of a transportation vehicle according to claim 2, wherein the locating plate is integrally molded.

4. The driving assembly of a transportation vehicle according to claim 2, wherein the driving assembly comprises a guide screw (6), an upper end of the guide screw is fixed on the first limit part through screw-thread fit, and the first pressure spring sleeves the guide screw; and/or the upper end of the guide screw is fixed on the second limit part through screw-thread fit, and the second pressure spring sleeves the guide screw.

5. The driving assembly of a transportation vehicle according to claim 2 wherein the wheel seat is provided with a first locating seat (81) arranged upwards, the second limit part is provided with a second locating seat (82) towards the wheel seat, the first locating seat and the second locating seat are coaxially arranged, and both ends of the second pressure spring respectively sleeve the first locating seat and the second locating seat.

6. A transportation vehicle, comprising the driving assembly of a transportation vehicle according to any one of claims 1 to 5.

## Patentansprüche

1. Antriebsanordnung eines Transportfahrzeugs, umfassend ein Antriebsrad, ein Paar Universalräder (1), die beiderseits des Antriebsrads angeordnet sind, und einen mit dem Paar Universalräder verbundenen Synchronisierungsmechanismus, wobei der Synchronisierungsmechanismus ein Paar Radaufnahmen (2) und eine mit dem Paar Radaufnahmen (2) verbundene Synchronstange (3) umfasst, wobei jede Radaufnahme jeweils mit einer ersten Druckfeder (41) versehen ist, wobei die Antriebsanordnung des Transportfahrzeugs **dadurch gekennzeichnet ist, dass** jede Radaufnahme jeweils mit einer zweiten Druckfeder (42) versehen ist und die Ausdehnungsachse der ersten Druckfeder und die Ausdehnungsachse der zweiten Druckfeder in Längsrichtung angeordnet und zueinander parallel sind; die elastische Steifigkeit der ersten Druckfeder geringer ist als diejenige der zweiten Druckfeder und ein oberes Ende der ersten Druckfeder nach der Installation der Antriebsanordnung höher liegt als dasjenige der zweiten Druckfeder.

2. Antriebsanordnung eines Transportfahrzeugs nach Anspruch 1, wobei die Antriebsanordnung eine Positionierplatte (5) umfasst, wobei die Positionierplatte eine Seitenplatte und eine obere Begrenzungsplatte umfasst, die aneinander befestigt sind, wobei die Seitenplatte mittels Verbindungselementen an einem Fahrzeugkörper befestigt ist, wobei die obere Begrenzungsplatte an der Seitenplatte befestigt und mit einem ersten Begrenzungsteil und einem zweiten Begrenzungsteil versehen ist, die zu den Radaufnahmen hin angeordnet sind, wobei das erste Begrenzungsteil der ersten Druckfeder entsprechend angeordnet ist, das zweite Begrenzungsteil der zweiten Druckfeder entsprechend angeordnet ist und das erste Begrenzungsteil höher als das zweite Begrenzungsteil ist.

3. Antriebsanordnung eines Transportfahrzeugs nach Anspruch 2, wobei die Positionierplatte einstückig geformt ist.

4. Antriebsanordnung eines Transportfahrzeugs nach Anspruch 2, wobei die Antriebsanordnung eine Führungsschraube (6) umfasst, wobei ein oberes Ende der Führungsschraube mittels Gewindeeingriffs an dem ersten Begrenzungsteil befestigt ist und die erste Druckfeder die Führungsschraube umgibt; und/oder wobei das obere Ende der Führungsschraube mittels Gewindeeingriffs an dem zweiten Begrenzungsteil befestigt ist und die zweite Druckfeder die Führungsschraube umgibt.

5. Antriebsanordnung eines Transportfahrzeugs nach Anspruch 2, wobei die Radaufnahme mit einem nach oben gerichteten ersten Positioniersitz (81) versehen ist, das zweite Begrenzungsteil mit einem zu der Radaufnahme hin angeordneten zweiten Positioniersitz (82) versehen ist, der erste Positioniersitz und der zweite Positioniersitz koaxial angeordnet sind und die beiden Enden der zweiten Druckfeder jeweils den ersten beziehungsweise den zweiten Positioniersitz umgeben.

6. Transportfahrzeug, umfassend die Antriebsanordnung eines Transportfahrzeugs nach einem der Ansprüche 1 bis 5.

## Revendications

1. Ensemble d'entraînement d'un véhicule de transport, comprenant une roue motrice, une paire de roues universelles (1) agencées des deux côtés de la roue motrice, et un mécanisme de synchronisation relié à une paire de roues universelles, dans lequel le mécanisme de synchronisation comprend une paire de supports de roue (2) et une tige de synchronisation (3) reliée à une paire de supports de roue (2), chaque support de roue étant respectivement pourvu d'un premier ressort de compression (41), l'ensemble d'entraînement du véhicule de transport étant **caractérisé en ce que** chaque support de roue est respectivement pourvu d'un second ressort de compression (42), et **en ce que** l'axe d'expansion du premier ressort de compression et l'axe d'expansion du second ressort de compression sont agencés longitudinalement et parallèlement l'un à l'autre ; la raideur élastique du premier ressort de compression est inférieure à celle du second ressort de compression, et une extrémité supérieure du premier ressort de compression est située plus haut que celle du second ressort de compression après que l'ensemble d'entraînement a été installé.

2. Ensemble d'entraînement d'un véhicule de transport selon la revendication 1, dans lequel l'ensemble d'entraînement comprend une plaque de positionnement (5), la plaque de positionnement comprenant une plaque latérale et une plaque de limitation supérieure qui sont fixées l'une à l'autre, la plaque latérale étant fixée sur un corps de véhicule au moyen de pièces de liaison, la plaque de limitation supérieure étant fixée sur la plaque latérale et étant pourvue d'une première partie de limitation et d'une seconde partie de limitation qui sont agencées en direction des supports de roue, la première partie de limitation étant agencée en correspondance avec le premier ressort de compression, la seconde partie de limitation étant agencée en correspondance avec le second ressort de compression, et la première partie de limitation étant située plus haut que la seconde partie de limitation.

3. Ensemble d'entraînement d'un véhicule de transport selon la revendication 2, dans lequel la plaque de positionnement est moulée d'un seul tenant.

4. Ensemble d'entraînement d'un véhicule de transport selon la revendication 2, dans lequel l'ensemble d'entraînement comprend une vis de guidage (6), une extrémité supérieure de la vis de guidage étant fixée sur la première partie de limitation par engagement fileté, et le premier ressort de compression étant disposé autour de la vis de guidage ; et/ou l'extrémité supérieure de la vis de guidage étant fixée sur la seconde partie de limitation par engagement fileté, et le second ressort de compression étant disposé autour de la vis de guidage.

5. Ensemble d'entraînement d'un véhicule de transport selon la revendication 2, dans lequel le support de roue est pourvu d'un premier siège de positionnement (81) agencé vers le haut, la seconde partie de limitation est pourvue d'un second siège de positionnement (82) orienté vers le support de roue, le premier siège de positionnement et le second siège de positionnement sont agencés coaxialement, et les deux extrémités du second ressort de compression sont respectivement disposées autour du premier siège de positionnement et du second siège de positionnement.

6. Véhicule de transport, comprenant l'ensemble d'entraînement d'un véhicule de transport selon l'une quelconque des revendications 1 à 5.
